# EUROPEAN PATENT APPLICATION

(11) **EP 2 768 270 A1**
(43) Date of publication of application: **20.08.2014**
(21) Application number: 13305169.8
(22) Date of filing: 14.02.2013
(51) Int. Cl.: H04W 76/02

(54) **A method for establishing a network assisted device-to-device direct communication, and base stations, a gateway and a device therefor**

(71) Applicant: ALCATEL LUCENT, 92100 Boulogne-Billancourt (FR)
(72) Inventor: Doetsch, Uwe, 70435 Stuttgart (DE); Braun, Volker, 70435 Stuttgart (DE); Gebert, Jens, 70435 Stuttgart (DE)
(74) Representative: Kleinbub, Oliver

(57) **Abstract**

The invention concerns a method for establishing a direct communication in a communication network between a first device (UE1) served by a first base station (BS1) and a second device (UE2) served by a second base station (BS2), wherein a base station of said first and second base station (BS1, BS2) is determined as master base station (BS1) for coordination of said direct communication, at least one device of said first and second device (UE1, UE2) performs signal measurements of signals sent by another device of said first and second device (UE1, UE2), said at least one device of said first and second device reports results of said measurements of signals to the master base station (BS1), the master base station (BS1) decides based on said results whether the direct communication shall be established, and base stations (BS1, BS2), a gateway (PDNGW) and a device (UE2) therefor.

## Description

### Field of the invention

The invention relates to a method for establishing a direct communication in a communication network between a first device served by a first base station and a second device served by a second base station, and base stations, a gateway and a device adapted to perform said method.

### Background

In today's Third Generation Partnership Project (3GPP) based communication networks, a device is connected to the infrastructure of a communication network.

A new topic in the Third Generation Partnership Project is direct device-to-device (D2D) communication, where feasibility studies are ongoing e.g. in the framework of proximity services (ProSe), as e.g. described in the technical report 3GPP TR 22.803.

### Summary

Current D2D mechanisms are typically WLAN and Bluetooth based and the user has to setup the connection directly, e.g. by selecting the destination device from a list of scanned devices and then security keys must be exchanged which usually involves human interactions which are inconvenient for the user.

Thus, a basic idea of the invention is, that a device shall not setup a D2D connection directly without involving the infrastructure of a communication network, but to trigger the infrastructure to setup the D2D connection.

Current specifications according to the state of the art do not provide details on a triggering mechanism, as e.g. which 3GPP message to use for said triggering mechanism, to set up such a direct device-to-device connection.

Network-assisted direct device-to-device (D2D) communication is expected to become a component of next generation wireless communications systems for efficient support of proximity-based services or to enable public safety applications.

A direct D2D link can be established between two devices, as e.g. user terminals (UEs), having the same serving base station, or it can also be established between two devices having two different serving base stations. The latter case is considered in the following.

The object of the invention is thus to propose a method for establishing a direct communication in a communication network between a first device served by a first base station and a second device served by a second base station which is fast and flexible and does not require lengthy human interactions.

The basic idea of embodiments of the invention is to define a procedure for inter-base station message exchange to set up a direct D2D link between two devices having different serving base stations.

The object is thus achieved by a method for establishing a direct communication in a communication network between a first device served by a first base station and a second device served by a second base station, wherein
●a base station of said first and second base station is determined as master base station for coordination of said direct communication,
• at least one device of said first and second device performs signal measurements of signals sent by another device of said first and second device,
• said at least one device of said first and second device reports results of said measurements of signals to the master base station,
• the master base station decides based on said results of said measurements of signals whether the direct communication shall be established, and informs another base station of said first and second base station whether the direct communication shall be established,
• and the master base station notifies a device of said first and second device which is served by the master base station, and the other base station about allocated resources for the direct communication.

The object of the invention is furthermore achieved by a base station for establishing a direct communication in a communication network between a first device served by the base station and a second device served by a second base station, wherein the base station is adapted to
- receive results of signal measurements performed by at least one device of said first and second device of signals sent by another device of said first and second device,
- decide based on said results of said measurements of signals whether the direct communication shall be established,
- inform the second base station whether the direct communication shall be established,
- and notify the first device, and the second base station about allocated resources for the direct communication.

The object of the invention is furthermore achieved by a base station for establishing a direct communication in a communication network between a first device served by a first base station and a second device served by the base station, wherein the base station is adapted to
- receive information from the first base station whether the direct communication shall be established,
- and notify the second device about allocated resources for the direct communication.

The object of the invention is furthermore achieved by a gateway for establishing a direct communication in a communication network between a first device served by a first base station and a second device served by a second base station, wherein the gateway is adapted to
- detect that data received from the first device via the first base station are sent to the second base station,
- and trigger the establishing of said direct communication.

The object of the invention is furthermore achieved by a device for establishing a direct communication in a communication network between a first device served by a first base station and said device served by a second base station, wherein said device is adapted to perform a downlink synchronization with the first base station taking into account a time advance relative to a downlink timing of said first base station.

The invention is described in the following within the framework of 3GPP LTE, however as the invention is not restricted to 3GPP LTE, but can in principle be applied in other networks that can potentially offer direct D2D communication, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows a message sequence chart for establishing a network triggered direct communication in a communication network between a first device served by a first base station and a second device served by a second base station according to an embodiment of the invention.
Fig. 4 schematically shows a message sequence chart for establishing a device triggered direct communication in a communication network between a first device served by a first base station and a second device served by a second base station according to an embodiment of the invention.

### Description of the embodiments

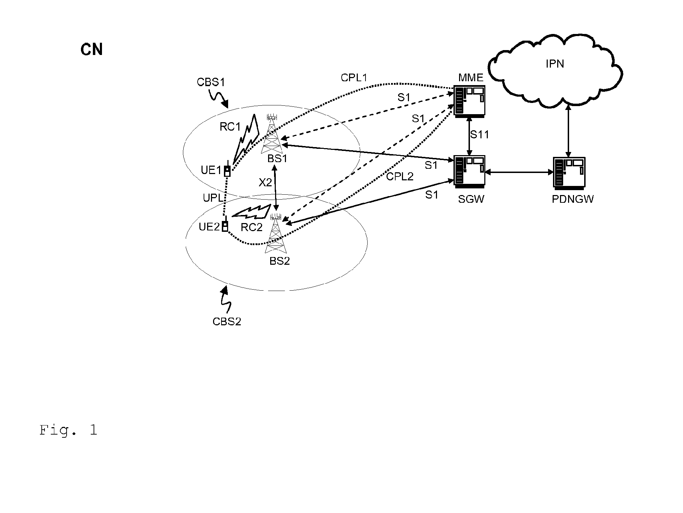

Fig. 1 shows as an example of a communication network in which the invention can be implemented a communication network CN according to the standard 3GPP LTE.

Said communication network CN comprises a first and a second base station BS1 and BS2, user terminals UE1 and UE2, a serving gateway SGW, a packet data network gateway PDNGW, and a mobility management entity MME.

The user terminals UE1 and UE2 are located in a coverage area CBS1 and CBS2 of the first base station BS1 and the second base station BS2, respectively, and are connected via radio connections RC1 and RC2 to the first base station BS1 and the second base station BS2, respectively. In future evolutions of LTE, each of the user terminals UE1-UE2 could also be connected via radio connections to multiple base stations. The base stationsBS1 and BS2 are in turn connected to the serving gateway SGW and to the mobility management entity MME, i.e. to the evolved packet core (EPC), via the so-called S1 interface.

The base stations BS1 and BS2 are connected among each other via the so-called X2 interface.

The serving gateway SGW is connected to the packet data network gateway PDNGW, which is in turn connected to an external IP network IPN. The serving gateway SGW is furthermore connected to the mobility management entity MME via a so-called S11 interface.

The S1 interface is a standardized interface between a base station, i.e. an eNodeB in this example, and the Evolved Packet Core (EPC). The S1 interface has two flavours, S1-MME for exchange of signalling messages between one of the base stationsBS1 and BS2, and the mobility management entity MME and S1-U for the transport of user datagrams between one of the base stationsBS1 and BS2, and the serving gateway SGW.

The X2 interface is added in 3GPP LTE standard primarily in order to transfer the user plane signal and the control plane signal during handover.

The serving gateway SGW performs routing of the IP user data between the base stationsBS1 and BS2, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1, UE2, and the respective serving base station BS1,BS2.

The mobility management entity MME performs tasks of the subscriber management and the session management, and also performs the mobility management during handover between different access networks.

In case that a direct D2D link between the first user terminal UE1 and the second user terminal UE2 has been established, a user plane UPL for direct transmission of user data between the first and the second user terminal UE1 and UE2 is established. The corresponding control plane CPL1 of the first user terminal UE1 is established between the first user terminal UE1 and the mobility management entity MME via the first base station BS1, and the corresponding control plane CPL2 of the second user terminal UE2 is established between the second user terminal UE2 and the mobility management entity MME via the second base station BS2.

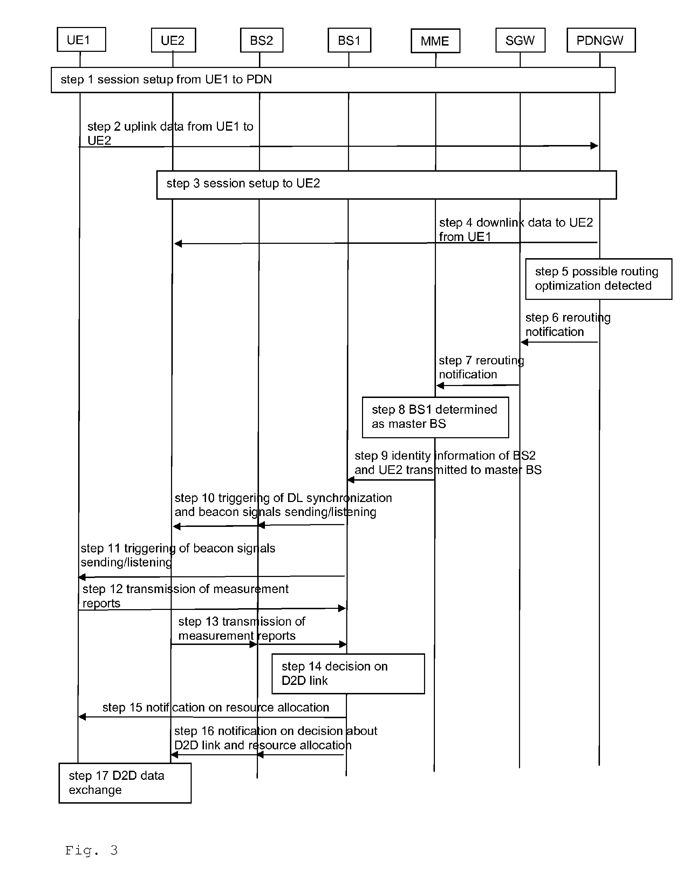

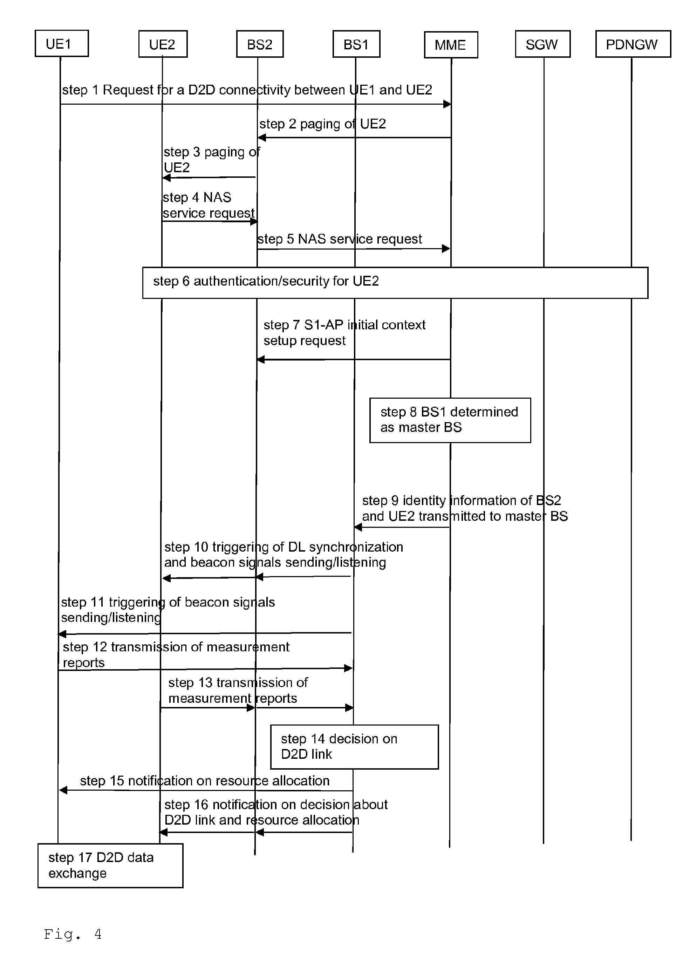

According to embodiments of the invention, methods for establishing a device triggered and a network triggered direct communication in a communication network between a first device served by a first base station and a second device served by a second base station are proposed and will be described below under figs. 3 and 4.

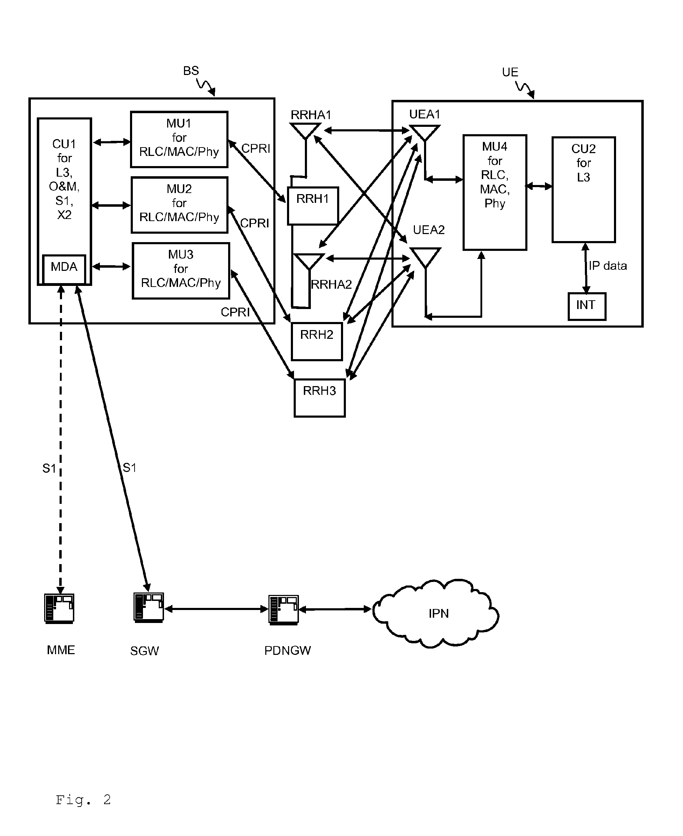

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, methods for establishing a direct communication in a communication network between a first device served by a first base station and a second device served by a second base station, as e.g. depicted in fig. 1, which is fast and flexible and does not require lengthy human interactions are proposed and will be described according to embodiments of the invention.

Fig. 3 schematically shows a message sequence chart for establishing a network triggered direct communication in a communication network between a first device served by a first base station and a second device served by a second base station, as e.g. depicted in fig. 1 and described above, according to an embodiment of the invention.

In step 1, the first user terminal UE1 sets up a conventional session to the Public Data Network (PDN), e.g. by means of a UE triggered service request as e.g. described in the standard 3GPP TS 23.401, section 5.3.4.1.

In step 2, the first user terminal UE1 sends uplink data for the second user terminal UE2 to the Public Data Network Gateway PDNGW. In the Public Data Network Gateway PDNGW, the uplink data is routed back towards the second user terminal UE2.

In step 3, as the second user terminal UE2 shall have no active session, e.g. as it is in idle mode, a network triggered service request or session setup has to be executed, as e.g. described in the standard 3GPP TS 23.01, section 5.3.4.3.

In step 4, the downlink data packets are transported towards the second user terminal UE2.

In step 5, the Public Data Network Gateway PDNGW detects that routing optimization e.g. via a D2D connection may be possible, as user plane traffic, i.e. typically IP packets, coming from an operator's network, i.e. 3GPP network in the embodiment, is routed back to the operator's network, and the Public Data Network Gateway PDNGW initiates the sending of a notification towards the Mobility Management Entity MME. As the embodiment is based on the case that a user sets up a normal packet data session to a public network, control elements like the Mobility Management Entity MME have no information on the final destination of IP sessions. However, as the Public Data Network Gateway PDNGW terminates a transparent routing of IP traffic from the first user terminal UE1, the Public Data Network Gateway PDNGW knows that the IP traffic is rerouted and also knows the identity of the sending and the receiving user terminals UE1 and UE2. So the Public Data Network Gateway PDNGW knows that the two user terminals UE1 and UE2 communicate with each other and based on this information, further mechanisms for analyzing the possibility of D2D communication can be triggered. Thus, a rerouting of user plane traffic triggers a mechanism to analyze whether and how routing can be optimized and whether a direct device-to-device connection is seen suitable. If an analysis of the possible D2D connection, as e.g. described in the following, indicates that a direct device-to-device connection is suitable, a direct device-to-device connection shall be setup. Such an analyzing mechanism can for example be located in the Mobility Management Entity MME as e.g. described in this embodiment.

In step 6, as in the 3GPP architecture, there is no direct interface between the Public Data Network Gateway PDNGW and the Mobility Management Entity MME, a rerouting notification message is first sent to the Serving Gateway SGW indicating the possibility of D2D communication. Said rerouting notification message comprises information about the identity of the sending and the receiving user terminals UE1 and UE2.

In step 7, the Serving Gateway SGW sends the rerouting notification message to the Mobility Management Entity MME.

In step 8, the Mobility Management Entity MME determines a master base station, which is the first base station BS1 in the embodiment, that is responsible to check whether a direct D2D link can be used. The master base station can in principle be either of the serving base stations BS1 and BS2. With a network triggered call setup as in the embodiment, the master base station is preferably the base station which generates more traffic going back into the Radio Access Network or going to a certain neighbor base station, which shall be the first base station BS1 in the embodiment. Thus, in the embodiment, the first base station BS1 is chosen as master base station. With a call setup procedure for a D2D link triggered by a user terminal, as in the embodiment depicted in fig. 4 and described below, the natural choice is to choose the serving base station of the call setup procedure triggering user terminal as master base station. However, in further embodiments, the decision about the master base station could also be based on a load in the base stations, as e.g. control or user plane load, or based on a number of connected user terminals. The decision about the master base station could also be based on capabilities of the user terminals such as supported radio spectrum, capabilities to support direct D2D communications such as sending or receiving of beacon signals or data, or the supported standards release.

In step 9, the Mobility Management Entity MME sends to the master base station BS1 information about the serving base station BS2, in the sequel called slave base station, of the second user terminal UE2 involved in the possible D2D link. Said information may e.g. comprise a cell-ID or an IP address of the slave base station BS2, and identity information of the second user terminal UE2 attached to the slave base station BS2, as e.g. a Cell Radio Network Temporary Identity (C-RNTI) or a Temporary International Mobile Subscriber Identity (TIMSI).

In step 10, the master base station BS1 instructs the slave base station BS2 to trigger the second user terminal UE2 to establish a downlink synchronization with the cell provided by the master base station BS1, and to send out beacon signals, possibly taking into account a time advance, with predefined resource allocation, as e.g. time-frequency resources or spreading codes, and signal parameters, as e.g. root and shift values of so-called Zadoff-Chu sequences, and/or to detect predefined beacon signals sent e.g. by the first user terminal UE1. Alternatively, instead of triggering the second user terminal UE2 to establish a downlink synchronization with the cell provided by the master base station BS1, the master base station BS1 can instruct the slave base station BS2 to trigger a handover of the second user terminal UE2 to change the serving cell from the second base station B2 to the first base station BS1. In this embodiment, the second user terminal UE2 can e.g. be run in a so-called soft handover mode, and the D2D link can be performed solely via the master base station BS1. Network services, as e.g. downloads, can still be performed via the slave base station BS2.

In step 11, the master base station BS1 further instructs the first user terminal UE1to send out beacon signals with predefined resource allocation, possibly taking into account a time advance, as e.g. time-frequency resources or spreading codes, and signal parameters, as e.g. root and shift values of so-called Zadoff-Chu sequences, and/or to detect predefined beacon signals sent e.g. by the second user terminal UE2.

In step 12, the first user terminal UE1 reports to the serving master base station BS1 measurement results such as received power or received Signal to Interference and Noise Ratio (SINR) of beacon signals sent by the second user terminal UE2. Preferably, the first user terminal UE1 reports also measurement results based on pilots sent out by the serving master base station BS1, as e.g. Reference Signal Received Power (RSRP) handover measurement results or CQI measurement results.

In step 13, the second user terminal UE2 reports via the serving slave base station BS2 to the master base station BS1 measurement results such as received power or received Signal to Interference and Noise Ratio (SINR) of beacon signals sent by the first user terminal UE1. Preferably, the second user terminal UE2 reports also measurement results based on pilots sent out by the serving slave base station BS2, as e.g. Reference Signal Received Power (RSRP) handover measurement results or CQI measurement results. In an embodiment of the invention, the slave base station BS2 first processes the measurement results e.g. by averaging a multiple of reported measurement results to reduce signaling overhead. According to embodiments of the invention, either both user terminals UE1 and UE2 send and detect beacon signals, or only one user terminal UE1 or UE2 sends beacon signals, and the other user terminal UE1 or UE2 detects the beacon signals.

In step 14, the master base station BS1 analyses the received measurement reports from the first user terminal UE1 and/or the second user terminal UE2 by comparing beacon based measurement reports with pilot based measurement reports preferably summed with an offset value and/or by comparing beacon based measurement reports with thresholds, e.g. configurable via Operation and Maintenance (O&M). The master base station BS1 can e.g. decide to use a D2D communication only if a received beacon power is above a threshold, or if a received beacon SINR is higher than a pilot SINR + offset value. In an embodiment of the invention, the master base station BS1 can further decide about a resource allocation of the direct D2D communication, e.g. by a semi-static allocation of time-frequency resources, possibly taking into account a time advance. Alternatively, the resource allocation of the direct D2D communication can be predefined e.g. by Operation and Maintenance (O&M), or Operation and Maintenance (O&M) can provide some rules for the master base station BS1 how to decide about the resource allocation.

In step 15, the master base station BS1 conveys information about the resource allocation for the direct D2D communication to the first user terminal UE1 in case that the master base station BS1 has taken the decision that a direct D2D communication between the first and the second user terminal UE1 and UE2 shall be established. In case that direct D2D communication shall not be established, the master base station BS1 triggers the first user terminal UE1 to stop the transmission/reception of beacon signals.

In step 16, the master base station BS1 informs the slave base station BS2 about the decision whether a direct D2D communication shall be established, and the slave base station BS2forwards information about the resource allocation for the direct D2D communication to the second user terminal UE2 in case that the master base station BS1 has taken the decision that a direct D2D communication between the first and the second user terminal UE1 and UE2 shall be established, possibly taking into account a time advance relative to the DL timing of the master base station BS1. In case that direct D2D communication shall not be established, the slave base station BS2 triggers the second user terminal UE2 to stop the transmission/reception of beacon signals.

Based on the information about the resource allocation conveyed in step 15 and 16, the user terminals UE1 and UE2 can establish a direct D2D communication as shown in step 17.

Fig. 4 schematically shows a message sequence chart for establishing a device triggered direct communication in a communication network between a first device served by a first base station and a second device served by a second base station, as e.g. depicted in fig. 1 and described above, according to an embodiment of the invention. This mechanism may be applied in case that the first user terminal UE1 sends an indicator for requesting a direct D2D communication and the address of the second user terminal UE2 in a Public Data Network (PDN) Connectivity Request.

In step 1, the first user terminal UE1 sends a connectivity request for a direct D2D communication to the Mobility Management Entity MME. The first user terminal UE1 uses a conventional call setup method to establish a direct D2D connection, but with the difference that one of the information elements in the PDN Connectivity Request includes an indicator that a direct D2D connection is requested. Said indicator can e.g. be a newly defined value for the APN, e.g. "Direct D2D Connection" and then giving the identifier of the second user terminal UE2 for the direct D2D connection in a separate parameter, or a phone number of the second user terminal UE2 which is called, i.e. a Mobile Station International Subscriber Directory Number (MSISDN) directly as APN address.

In step 2, by means of receiving said indicator for requesting a direct D2D connection, the Mobility Management Entity MME detects that the first user terminal UE1 wants to setup a direct D2D connection with the second user terminal UE2. Thus, the Mobility Management Entity MME sends a paging request message to the second base station BS2.

In step 3, the second base station BS2 sends a paging request message to the second user terminal UE2.

In step 4, triggered by the received paging request, the user terminal UE2 sends a Non Access Stratum (NAS) service request to the second base station BS2. The purpose of the NAS service request procedure is to transfer the EPS Mobility Management(EMM) mode from EMM-IDLE to EMM-CONNECTED mode and to establish radio and S1 bearers e.g. when uplink user data or signaling data is to be sent.

In step 5, the second base station BS2 sends the NAS service request to the Mobility Management Entity MME.

In step 6, an authentication and security procedure for the second user terminal UE2 is triggered in the network.

In step 7, the Mobility Management Entity MME establishes the bearer between the second base station BS2 and the Serving Gateway SGW. It sends the S1-Application Protocol (S1-AP) Initial Context Setup Request to the second base station BS2 to create a context for the second user terminal UE2, which includes the bearer Context and the security Context. After receiving the Initial Context Setup Request, the second base station BS2 establishes the security parameters with the second base station UE2 by initiating a Security Mode Command Procedure.

In step 8, the Mobility Management Entity MME determines a master base station, which is the first base station BS1 in the embodiment, that is responsible to check whether a direct D2D connection can be used. The master base station can in principle be either of the serving base stations BS1 and BS2. With a call setup procedure triggered by a user terminal, as in the embodiment, the natural choice is to chose the serving base station of the call setup procedure triggering user terminal as master base station. Thus, in the embodiment, the first base station BS1 as the serving base station of the triggering first user terminal UE1 is chosen as master base station. The network then checks if parameters as e.g. subscriptions and capabilities allow the setup of a direct D2D connection. If so, then the direct D2D connection setup is triggered by the Mobility Management Entity MME as depicted in steps 9-17 in fig. 3 and described above.

In the embodiments described above and depicted e.g. in figs. 3 and 4, the corresponding processing steps can be performed e.g. in the modem unit boards MU1-MU3 and the control unit board CU1 of the first and second base station BS1, BS2, and in the modem unit board MU4 and the control unit board CU2 of the user terminals UE1, UE2 as depicted in fig. 2 and described above.

## Claims

1. A method for establishing a direct communication in a communication network between a first device (UE1) served by a first base station (BS1) and a second device (UE2) served by a second base station (BS2), wherein
• a base station of said first and second base station (BS1, BS2) is determined as master base station (BS1) for coordination of said direct communication,
• at least one device of said first and second device (UE1, UE2) performs signal measurements of signals sent by another device of said first and second device (UE1, UE2),
• said at least one device of said first and second device (UE1, UE2) reports results of said measurements of signals to the master base station (BS1),
• the master base station (BS1) decides based on said results of said measurements of signals whether the direct communication shall be established, and informs another base station (BS2) of said first and second base station (BS1, BS2) whether the direct communication shall be established,
• and the master base station (BS1) notifies a device (UE1) of said first and second device (UE1, UE2) which is served by the master base station (BS1), and the other base station (BS2) about allocated resources for the direct communication.

2. A method according to claim 1, wherein the master base station (BS1) instructs the other base station (BS2) of said first and second base station (BS1, BS2) to trigger one of said first and second device (UE2) served by the other base station (BS2) to establish a downlink synchronization with the master base station (BS1).

3. A method according to claim 1, wherein the master base station (BS1) instructs the other base station (BS2) of said first and second base station (BS1, BS2) to trigger a handover of one of said first and second device (UE2) served by the other base station (BS2) to the master base station (BS1).

4. A method according to any of the preceding claims, wherein a base station (BS1) serving a device (UE1) of said first and second device (UE1, UE2) that triggers a call setup procedure is determined as master base station (BS1).

5. A method according to any of the preceding claims, wherein a base station (BS1) of said first and second base station (BS1, BS2) is determined as master base station (BS1) based on at least one of the group of an amount of generated traffic towards a core network or a neighbouring base station, a traffic load in the first and second base station (BS1, BS2), and a number of connected devices (UE1, UE2).

6. A method according to any of the preceding claims, wherein the master base station (BS1) triggers said at least one device of said first and second device (UE1, UE2) to perform said signal measurements of signals sent by the other device of said first and second device (UE1, UE2).

7. A method according to any of the preceding claims, wherein in order to decide whether the direct communication shall be established, the master base station (BS1) compares the results of said measurements of signals with at least one of a group of a threshold, results of measurements of pilot signals sent from at least one of the first and second base station (BS1, BS2), and a sum of an offset value and results of measurements of pilot signals sent from at least one of the first and second base station (BS1, BS2).

8. A method according to any of the preceding claims, wherein the master base station (BS1) receives identity information of at least one of a group of the other base station (BS2) and a device (UE2) of said first and second device (UE1, UE2) served by the other base station (BS2).

9. A method according to any of the preceding claims, wherein a device (UE1) of said first and second device (UE1, UE2) triggers a call setup procedure indicating that the direct communication between the first device (UE1) and the second device (UE2) shall be setup.

10. A method according to any of the claims 1 to 8, wherein in case a communication between the first device (UE1) and the second device (UE2) via a gateway (PDNGW) is setup, said gateway (PDNGW) triggers the establishing of said direct communication.

11. A method according to any of the preceding claims,
wherein said results of said measurements of signals are transmitted from said other base station (BS2) of said first and second base station (BS1, BS2) to the master base station (BS1) via an X2 interface.

12. A base station (BS1) for establishing a direct communication in a communication network between a first device (UE1) served by the base station (BS1) and a second device (UE2) served by a second base station (BS2), wherein the base station (BS1) is adapted to
• receive results of signal measurements performed by at least one device of said first and second device (UE1, UE2) of signals sent by another device of said first and second device (UE1, UE2),
• decide based on said results of said measurements of signals whether the direct communication shall be established,
• inform the second base station (BS2) whether the direct communication shall be established,
• and notify the first device (UE1), and the second base station (BS2) about allocated resources for the direct communication.

13. A base station (BS2) for establishing a direct communication in a communication network between a first device (UE1) served by a first base station (BS1) and a second device (UE2) served by the base station (BS2), wherein the base station (BS2) is adapted to
• receive information from the first base station (BS1) whether the direct communication shall be established,
• and notify the second device (UE2) about allocated resources for the direct communication.

14. A gateway (PDNGW) for establishing a direct communication in a communication network between a first device (UE1) served by a first base station (BS1) and a second device (UE2) served by a second base station (BS2), wherein the gateway (PDNGW) is adapted to
• detect that data received from the first device (UE1) via the first base station (BS1) are sent to the second base station (BS2),
• and trigger the establishing of said direct communication.

15. A device (UE2) for establishing a direct communication in a communication network between a first device (UE1) served by a first base station (BS1) and said device (UE2) served by a second base station (BS2), wherein said device (UE2) is adapted to perform a downlink synchronization with the first base station (BS1) taking into account a time advance relative to a downlink timing of said first base station (BS1).

16. A communication network (CN) for mobile communication comprising at least one base station (BS1) according to claim 12 and at least one base station (BS2) according to claim 13.
